Europäisches Patentamt

European Patent Office

Office européen des brevets

(11) Veröffentlichungsnummer: **0 199 001**
B1

(12) EUROPÄISCHE PATENTSCHRIFT

(45) Veröffentlichungstag der Patentschrift:
18.10.89

(51) Int. Cl.⁴: **A 01 G 7/02, A 01 G 9/18**

(21) Anmeldenummer: 86101115.3

(22) Anmeldetag: 28.01.86

(54) Anlage für die Schadgaszufuhr zu einer Expositions-Kammer.

(30) Priorität: 26.04.85 DE 3515072

(43) Veröffentlichungstag der Anmeldung:
29.10.86 Patentblatt 86/44

(45) Bekanntmachung des Hinweises auf die Patenterteilung:
18.10.89 Patentblatt 89/42

(84) Benannte Vertragsstaaten:
AT CH FR GB IT LI

(56) Entgegenhaltungen:
US-A- 3 398 481

(73) Patentinhaber: GESELLSCHAFT FÜR STRAHLEN- UND UMWELTFORSCHUNG M.B.H., Ingolstädter Landstrasse 1 Post Oberschleissheim, D-8042 Neuherberg (DE)

(72) Erfinder: Schmolke, Wolfgang, Linkstrasse 106, D-8000 München 45 (DE)
Erfinder: Schramel, Peter, Fischerstrasse 10, D-8045 Ismaning (DE)
Erfinder: Drachenberg, Herbert, Josef-Frankl-Strasse 42, D-8000 München 50 (DE)
Erfinder: Kern, Wolfgang, Theod.-Heuss-Strasse 18, D-8042 Neuherberg (DE)

(74) Vertreter: Gottlob, Peter, Kernforschungszentrum Karlsruhe GmbH Stabs. Patente und Lizenzen Weberstrasse 5, D-7500 Karlsruhe 1 (DE)

**Beschreibung**

Die Erfindung betrifft eine Anlage für die Schadgaszufuhr zu einer Expositions-Kammer von Pflanzen, die über lange Zeiträume kontrollierten Bedingungen ausgesetzt sind, wobei ein Atmosphäregas durch die Schadgaszufuhr eine bestimmte Zusammensetzung erfährt.

In solchen Expositions-Kammern werden die Klimawerte und das Licht elektrisch geregelt. Die Bedienungsüberwachung und Schadgaszufuhr erfolgt mit einem lokalen Computernetzwerk, das den Kammerbetrieb durch einen Rufdienst überwacht und die Schadgaszufuhr mit einem Computerprogramm regelt. Die gewünschten Funktionen und die erhöhte Zuverlässigkeit müssen durch mechanische und elektronische Entwicklungen erreicht werden. So ist zu gewährleisten, daß über eine Computersprachausgabe der Anlagenzustand zu jeder Zeit vom Bedienungsbereitschaftsmann oder jedem anderen befugten Mitarbeiter abgehört werden kann. Diese Betriebsart ist gegen unbefugtes Eingreifen in den Computer zu sichern, da keinerlei Eingaben über den Sprachkanal möglich sind. Weiterhin sind die an den verschiedenen Orten des Kammersystems anfallenden Daten von dem am jeweiligen Ort aufgestellten Computer über das lokale Netzwerk auf einen Massenspeicher zu geben. Das gesamte lokale Netz einschließlich Massenspeicher, Netzwerkelektronik und Computergeräte sind mit einem Sofortstromgerät gegen Netzausfall zu sichern.

Die Routinedaten für Regelung und Überwachung werden im allgemeinen mit einem optischen Barcodeleser eingelesen. Mit einem Nadeldrucker wird eine Tafel erstellt, die alle üblichen Codekombinationen enthält. Sonderfunktionen werden mit einem parallelgeschalteten Fernschreiber eingegeben. Dieses Gerät protokolliert zusätzlich die Barcodeeingabe in Klarschrift.

Eine an einem Computer angeschlossene EEPROM-Programmierschaltung erstellt aus den eingegebenen Daten eine EEPROM, das in den Steuerungscomputer der Kammerbedienungseinrichtung eingesetzt wird. Schreibfehler und doppelte Eingaben entfallen. Zur Meßdatenerfassung und Steuersignalaussendung bildet ein programmierbarer Datalogger die Verbindung zwischen dem jeweiligen Computer am Ort mit den Steuer- und Meßsignalwandlern. Das Anlagenüberwachungsprogramm und das Schadstoffregelprogramm wird in kleine, für den Datalogger faßbare Teile zerlegt, die zu den vom Betriebsablauf geforderten Zeitpunkten vom jeweiligen Netzwerkcomputer in den Datalogger übertragen werden.

Beim Datalogger, einem Kompaktgerät, ist der Analog-Digitalkonverter so auf den eingebauten Rechner geschaltet, daß das bei Universalgeräten übliche Aufhängen des Peripheriegerätes nicht erfolgt. Der Datalogger ist durch Optokoppler galvanisch vom Computer getrennt. Durch Akkumulatoren ist ein 18-stündiger Betrieb bei Netzstörung gewährleistet. Die eingebaute Magnetbandkassettenstation, der eingebaute Drucker und die Handbedienungstastatur erlauben bei einer Computerstörung oder aus anderem Anlaß einen autonomen Betrieb.

Zur Alarmierung der Leitwarte stößt der Datalogger in 2-minütigem Abstand eine «Totmann»-Schaltung an. Bleibt dieses Signal aus, so wird in der Leitwarte ein Alarm ausgelöst. Der Wachhabende informiert daraufhin die Bereitschaft der Kammerbedienung.

All diese aufwendigen Überwachungsmaßnahmen erfordern eine zuverlässige Gasversorgung der Expositions-Kammer, insbesondere bei der Mischung von Atmosphäregas und Schadgas(en). Die Versorgung über Tage und Monate aus Gasflaschen, in denen das vorgefertigte Mischgas enthalten ist, wäre zumindest aus wirtschaftlichen Gründen wegen der Vielzahl der Flaschen und des damit verbundenen Flaschenumwechselns nicht einsetzbar.

Auch bei Antransport der Gase in Flaschen mit 100%iger Konzentration und Vorortmischung entstehen nahezu unüberwindliche technische Schwierigkeiten. Die 100%igen Gase sind nämlich für die Versuche mit sehr geringen Konzentrationen kaum mit den standardmäßigen Regelgeräten mit der erforderlichen Genauigkeit beherrschbar. Darüber hinaus ist eine brauchbare Gleichmäßigkeit mit sehr kleinen Gaströpfchen schwerlich zu erreichen.

Bei Verwendung der handelsüblichen Regler würde jede elektrische Störung zu einer starken Gefährdung des Versuchsgutes führen.

Die der Erfindung zugrundeliegende Aufgabe besteht nunmehr darin, eine Anlage der e.g. Art derart auszulegen, daß eine Gasmischung erreichbar ist, die über lange Zeit auch dann aufrechterhalten bleibt, wenn Betriebsstörungen auftreten.

Die Lösung ist in den kennzeichnenden Merkmalen des Anspruches 1 beschrieben.

Die übrigen Ansprüche geben vorteilhafte Weiterbildungen und Ausführungsbeispiele der Erfindung wieder.

Diese besonders vorteilhafte Gasmischeinrichtung gestattet mit Massendurchflußreglern zwei Gase in einem Vorratsbehälter zu mischen. Für die Kammeranwendung ist eine Komponente stets die Luft. Das vorgemischte, bzw. verdünnte Gas wird hierbei mit einer weiteren auf einem Massendurchflußregler basierenden Dosiereinrichtung aus dem Vorratsbehälter entnommen. Mit diesen Dosierern kann zusätzlich zur Handbedienung der erforderliche Tagesablauf mit dem Computer gefahren werden.

Als wichtige Größen werden die Werte der von Kammer zu Kammer umgetasteten Gasanalytik in den Computer übernommen und können als Regelgröße genutzt werden.

Die Erfindung wird im folgenden anhand eines Ausführungsbeispiels mittels der Fig. 1–4 näher erläutert.

Fig. 1 zeigt einen schematischen Überblick über einen Teil der gesamten Anlage;

Fig. 2 eine Schaltungsanordnung zur Mischung;

Fig. 3 eine Schaltungsanordnung für die Dosierung, und

Fig. 4 einen Schnitt durch einen Vormischer.

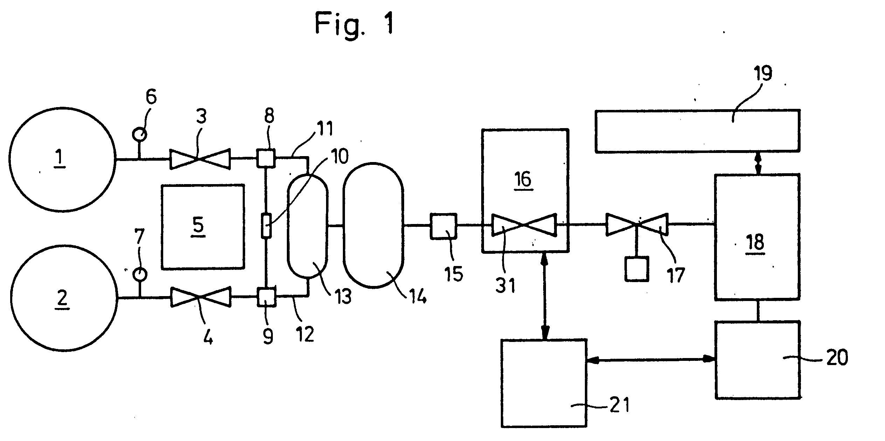

Gemäß Fig. 1 sollen im vorliegenden Fall z.B. die beiden Gase 1 und 2 miteinander vermischt werden. Beim Gas 1 handelt es sich z.B. um ein Schadgas CO, $NO_x$ oder $SO_x$, während das Gas 2 meist Atmosphäregas, d.h. Luft ist. Die Zugabe des Gases 1 erfolgt im ppm-Bereich, worin eine besondere Schwierigkeit zu sehen ist.

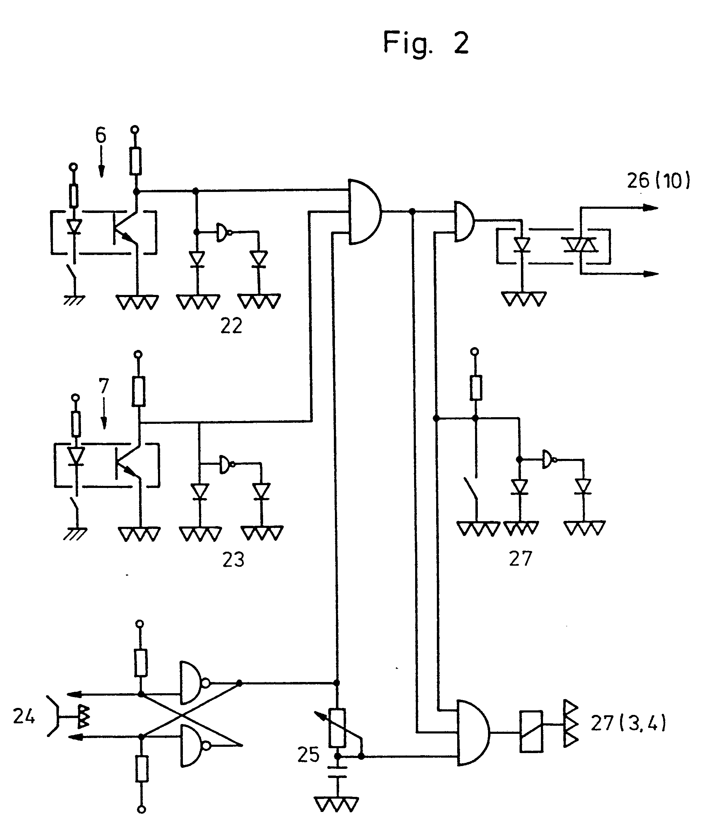

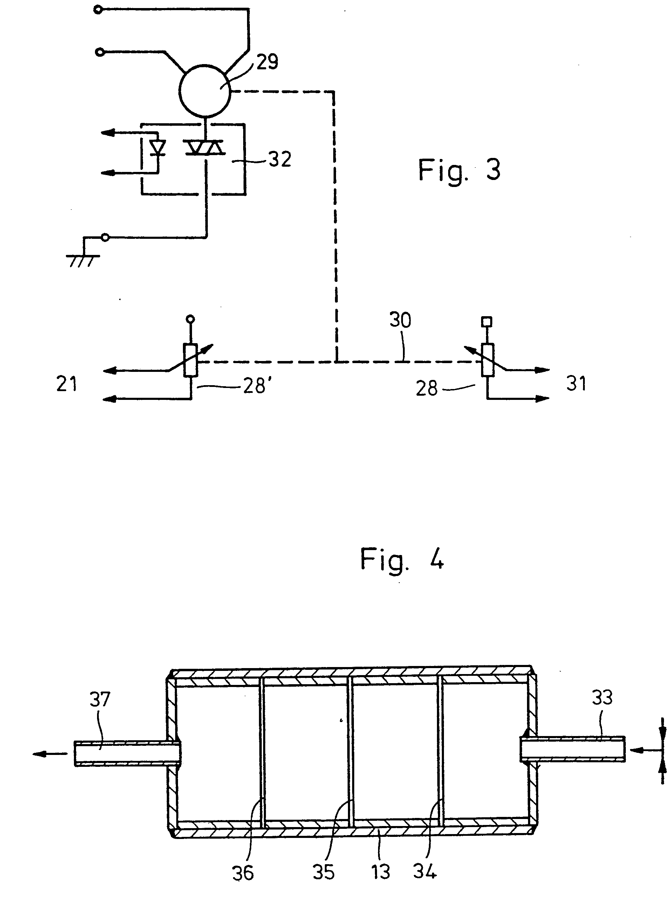

Die beiden Gase 1 und 2 werden jeweils massenmäßig mittels Massendurchflußreglern 3 und 4 von der Mischerelektronik 5 (Fig. 2) geregelt. Jedem Massendurchflußregler 3, 4 ist ein Maximumdruckwächter 6, 7 vor- und ein Absperrventil 8, 9 nachgeschaltet. Die Betätigung der Absperrventile 8, 9 erfolgt gleichzeitig mittels eines mit Preßluft betriebenen Organs 10, das selbst wieder von der Mischerelektronik 5 gesteuert wird. Die beiden Zuführungsleitungen 11, 12 treffen sich an einem Vormischer 13 (s. Fig. 4), dem ein Pufferspeicher 14 nachgeordnet ist. Aus diesem Pufferspeicher 14 wird das gemischte Gas über ein Reduzierventil 15, eine Dosiereinrichtung 16 (s. Fig. 3) mit Massendurchflußregler 31 sowie ein Sicherheitsventil 17 in die Expositions-Kammer 18 eingespeist. Die Dosiereinrichtung 16 garantiert eine konstante Massenentnahme (Massenverhältnisentnahme) aus dem Pufferspeicher 14. Die Versorgungseinheit 19, die Gasanalytik- und Registriereinheit 20 sowie der Datalogger 21 gehören den Peripheriegeräten an.

Um die Schadgase 1 für den Regelbereich der Dosierer 16 vorzubereiten, werden sie mit einem elektronisch geregelten Mischer 5 vorverdünnt. Hierfür ist die elektronische Schaltung gemäß Fig. 2 vorgesehen, die die zwei Gase zu mischen gestattet. Jeder Maximumdruckwächter 6, 7 mit Anzeige 22, 23 in jeder der beiden ankommenden Gasleitungen 11, 12 vor dem Massendurchflußregler 3, 4 gibt beim Ausfall eines der beiden Gase 1, 2 ein Sperrsignal an die dargestellte Reglerschaltung ab. Die beiden Gase 1, 2 werden durch die Massendurchflußregler 3, 4 definiert in den Mischbehälter eingeleitet. Mit einem Min-Max-Druckwächter 24 wird dessen Füllung überwacht. Um die Reglerventile 3, 4 zu entlasten und das sichere Schliessen der Leitung 11 bzw. 12 bei einem Reglerschaden oder Stromausfall zu gewähren, ist jedem Regler 3, 4 das eigene Preßluftventil 8, 9 nachgeschaltet. Ein elektronisches Verzögerungsglied 25 an der Mischersteuerung sorgt dafür, daß ein Preßluftrelais 26 des Organs 10 die pneumatischen Ventile 8, 9 jeweils vor dem Relais 27 schaltet und somit die Massendurchflußregler 3, 4 erst danach geöffnet werden. So wird verhindert, daß die nur auf fließendes Gas reagierenden Regler 3, 4 vollständig aufreißen und eine Gasblase hohen Druckes und unbestimmter Zusammensetzung in den Mischbehälter 13 gelangt (Flow-Schalter 27).

Das zentrale Bauteil der Gasdosierelektronik 16 (Fig. 3) ist eine Doppelpotentiometereinheit 28, 28', die mit einem Wechselstromgetriebemotor 29 (Öffnen – Schließen; optisches Lastrelais 32) bewegt wird. Auf der gleichen Achse 30 befindet sich der digitale Handeinstellknopf, der nicht nur die Potentiometerposition anzeigt, sondern auch einen Handbetrieb gestattet. Die Winkelstellung der Potentiometer 28, 28' bildet den Sollwert für den Massendurchflußregler 31 bzw. für den Datalogger 21. Mit dieser Einrichtung werden die elektrischen Sollgrößen aus dem Computersystem mechanisch gespeichert. Netzausfälle und einzelne ungeplante Stromstöße können dieses Gerät kaum beeinflussen, ebenso entfällt die bei Kollektormotoren übliche Funkenbildung.

Ein eigener Transformator (nicht dargestellt), der mit dem optischen Lastrelais 32 im Nulldurchgang geschaltet wird, trennt den Antrieb 29 nicht nur galvanisch von allen übrigen Stromkreisen ab, darüber hinaus werden auch alle Hochfrequenzabstrahlungen unterbunden. Der Sollwert wird von dem auf der Dataloggerseite 21 befindlichen Servopotentiometer 28' abgenommen, um die Winkeleinstellung zu regeln. Das zweite Potentiometer 28 steuert den Massendurchflußregler 31 an. Für die galvanische Abtrennung des Istwertes und des Spulenstromes werden zwei Trennverstärker (nicht näher dargestellt) eingesetzt. Neben der Einstellung des Istwertes stehen der Computerüberwachung das Istsignal des Reglers und der durch den Ventilmagneten fließende Strom zur Verfügung. Dieser Spulenstrom liefert bei geeigneter Programmierung im Vergleich mit den Soll- und Istwerten über das Zeitverhalten bei Durchflußänderungen eine starke Diskriminierung verschiedener Anlagen- und Gerätestörungen.

Eine Regelung in der Kammer 18 wird nicht durch analoge Koppelung mit der Gasanalytik 20, sondern über einen getrennten Dataloggerkanal vom Computer gesteuert, um das Langzeitverhalten und ev. Ausfälle der Analytik 20 für den unbeaufsichtigten Betrieb fest unter Kontrolle zu halten.

In Fig. 4 ist der Vormischer 13 dargestellt. Er besteht aus einem Zylindergefäß, in das eine gemeinsame Leitung 33 (Sammelleitung von 11 und 12) einmündet. In Strömungsrichtung gesehen sind innerhalb des Vormischers hintereinander Querwände 34–36 eingefügt, die aus Gittern mit, in Strömungsrichtung, konstanter oder abnehmender Maschenweite, bevorzugt 1,5 mm und 1 mm, bestehen. Sie ermöglichen eine homogene Durchmischung von Gas 1 (z.B. ppm-Bereich) mit Gas 2 (z.B. Atmosphäredruck). Die Entnahmeleitung 37 des Mischgases führt zum Pufferspeicher 14 (s. Fig. 1). Die Anzahl der Gitter ist variabel.

## Patentansprüche

1. Anlage für die Schadgaszufuhr zu einer Expositions-Kammer von Pflanzen, die über lange Zeiträume kontrollierten Bedingungen auszusetzen sind, wobei ein Atmosphäregas durch die Schadgaszufuhr eine bestimmte Zusammensetzung erfährt, gekennzeichnet durch

a) eine Schaltungsanordnung (5) zur Mischung des Atmosphäregases (2) mit den Schadgasen (1), wobei in jeder Gaszuleitung (11, 12) Massendurchflußregler (3, 4) mit nachgeschalteten Absperrventilen (8, 9) vorgesehen sind, die gemeinsam geschaltet werden, die beiden Gaszuleitungen (11, 12) führen

b) zu einer Vormischstufe (13) zur homogenen Durchmischung von Atmosphäregas (2) und Schadgasen (1), die gefolgt wird von

c) einem Pufferspeicher (14) für das derart zusammengesetzte Atmosphäre-/Schadgasgemisch (2, 1) und

d) eine rechnergesteuerte Dosiereinrichtung (16, 31) des Atmosphäre-/Schadgasgemisches (2, 1) für die Expositions-Kammer (18).

2. Anlage nach Anspruch 1, dadurch gekennzeichnet, daß die Schaltungsanordnung (5) je einen Maximumdruckwächter (6, 7) in jeder Gasleitung (11, 12) vor dem jeweiligen Massendurchflußregler (3, 4) aufweist, daß ein Min-Max-Druckwächter (24) die Füllung des Pufferspeichers (14) überwacht und eine Verzögerungsschaltung (25) die Absperrventile (8, 9) vor den Massendurchflußreglern (3, 4) öffnet.

3. Anlage nach Anspruch 1 und 2, dadurch gekennzeichnet, daß die Dosiereinrichtung (16, 31) einen Wechselstromgetriebemotor (29) mit einem Doppelpotentiometer (30) vorsieht.

4. Anlage nach Anspruch 1 oder einem der folgenden, dadurch gekennzeichnet, daß die Vormischstufe (13) aus einem Behälter besteht, der in Strömungsrichtung der zugeführten, ungemischten Gase (1, 2) Maschengitter (34–36) mit in Strömungsrichtung abnehmender Maschenweite aufweist.

## Claims

1. Arrangement for the supply of pollution gases into a room for exhibiting plants, which are to be subjected to conditions which are controlled for long periods of time, wherein an atmospheric gas experiences a predetermined combination by the supply of pollution gases, characterised by

a) a circuit arrangement (5) for mixing the atmospheric gas (2) with the pollution gases (1), wherein mass flow controllers (3, 4) are provided with subsequently added shut-off valves (8, 9) in each gas supply line (11, 12), which valves are connected together; the two gas supply lines (11, 12) lead to

b) a preliminary mixing stage (13) for the homogeneous thorough mixing of atmospheric gas (2) and pollution gases (1), which stage is followed by

c) a buffer reservoir (14) for storing the mixture of atmospheric and pollution gases (2, 1) which have thus been combined, and

d) a computer-controlled metering means (16, 31) for metering the mixture of atmospheric and pollution gases (2, 1) for the exhibition room (18).

2. Arrangement according to claim 1, characterised in that the circuit arrangement (5) has a maximum pressure monitor (6, 7) in each gas line (11, 12) upstream of the respective mass flow controller (3, 4), in that a minimum and maximum pressure monitor (24) monitors the filling of the buffer reservoir (14), and a retarding circuit (25) opens the shut-off valves (8, 9) upstream of the mass flow controllers (3, 4).

3. Arrangement according to claims 1 and 2, characterised in that the metering means (16, 31) provides an alternating-current driving motor (29) with a dual potentiometer (30).

4. Arrangement according to claim 1 or one of the following claims, characterised in that the preliminary mixing stage (13) includes a container which, in the flow direction of the unmixed gases (1, 2) supplied, has mesh grids (34–36) with a mesh width which decreases in the flow direction.

## Revendications

1. Unité d'introduction de gaz polluant dans une chambre d'exposition de plantes, qui sont exposées pendant des périodes prolongées à des conditions contrôlées, l'atmosphère gazeuse prenant une composition bien déterminée grâce à l'introduction de gaz polluant, caractérisée par:

a) une disposition de circuit (5) pour mélanger le gaz de l'atmosphère (2) avec les gaz polluants (1), des régulateurs de débit massique (3, 4) étant prévus sur chaque conduite d'arrivée de gaz (11, 12), avec des vannes de fermeture (8, 9) qui sont manoeuvrées ensemble, les deux conduites d'arrivée de gaz (11, 12) conduisent à

b) un étage de prémélange (13) pour réaliser le mélange homogène du gaz atmosphérique (2) et des gaz polluants (1), qui est suivi par

c) un réservoir-tampon (14) pour le mélange de gaz atmosphérique et de gaz polluants ainsi réalisé (2, 1) et

d) un dispositif de dosage (16, 31) piloté par ordinateur du mélange de gaz atmosphérique et de gaz polluants (2, 1) pour la chambre d'exposition (18).

2. Unité selon la revendication 1, caractérisée en ce que l'arrangement de circuit (5) présente un manostat d'asservissement de maximum (6, 7) dans chaque conduite de gaz (11, 12) en amont de chaque régulateur de débit massique (3, 4), qu'un manostat mini-maxi (24) surveille le remplissage du réservoir-tampon (14) et qu'un circuit de temporisation (25) ouvre les soupapes (8, 9) de fermeture avant les régulateurs de débit massique (3, 4).

3. Unité selon les revendications 1 et 2, caractérisée en ce que l'unité de dosage (16, 31) comprend un motoréducteur à courant alternatif (29) avec un potentiomètre double (30).

4. Unité selon la revendication 1 ou les revendications 2 et 3, caractérisée en ce que l'étage de prémélange (13) est constitué d'une cuve qui comprend dans le sens de l'écoulement des gaz non mélangés (1, 2) des grilles (34–36), avec une largeur de maille qui diminue dans le sens de l'écoulement.

EP 0199001 B1

# Fig. 1

# Fig. 2

Fig. 3

29

32

30

21        28'        28        31

Fig. 4

37        33

36    35    13    34